# EUROPEAN PATENT SPECIFICATION

(11) **EP 3 815 993 B1**
(45) Date of publication and mention of the grant of the patent: **29.03.2023**
(21) Application number: 19206315.4
(22) Date of filing: 30.10.2019
(51) Int. Cl.: B60T 1/04, F16D 49/00, B61H 1/00, F16D 65/56, F16D 66/02, B60T 13/36, B61H 15/00, B60T 17/22, F16D 65/22

(54) **TREAD BREAK UNIT FOR A RAILROAD VEHICLE**
LAUFFLÄCHENBREMSEINHEIT FÜR EIN SCHIENENFAHRZEUG
UNITÉ DE FREINAGE À BANDE DE ROULEMENT POUR UN VÉHICULE FERROVIAIRE

(43) Date of publication of application: 05.05.2021
(73) Proprietor: KNORR-BREMSE Systeme für Schienenfahrzeuge GmbH, 80809 München (DE)
(72) Inventor: KATONA, Geza, 1191 Budapest (HU); KÁKONYI, Róbert, 6300 Kalocsa (HU); ELSTORPFF, Marc-Gregory, 80368 München (DE); VANCSAY, Gyorgy, 1182 Budapest (HU); JENEI, Bela, 1042 Budapest (HU); HUTH, Vasko-Tonio, 2030 Érd (HU)

(56) References cited:
- EP-A1- 3 556 624
- WO-A1-02/096735
- CN-U- 209 115 580
- DE-A1-102017 123 564
- JP-A- 2001 330 063
- US-A- 3 707 208
- US-A- 6 006 868

## Description

The invention relates to a tread brake unit for a railroad vehicle comprising an actuator mounted to a housing of the brake unit, wherein the actuator is coupled to a brake pad holder via a wear re-adjustment means comprising a spindle.

Tread brake units are widely used, in particular for freight wagons due to their robustness. During use of the tread brake unit, the brake block and the wheel onto which the brake block is pressed wear during daily operation. For safety reasons, brake conditions are needed to be checked regularly, wherein the current control procedure relies on visually checking the brake block and the wheel by maintenance staff. This is cost-intensive and requires well trained maintenance personal.

Automatic wear sensing is known for disc brakes, for example from document WO 2018/178018 A1. According to this document, a contactless operating sensor is provided on or in the brake pad holder or on or in a caliper lever connected to the brake pad holder. The sensor measures a distance to a lateral surface of the brake disc in order to be able to calculate the wear of the brake pads. However, such arrangement is not advantageous for tread brake units since it only determines the wear of a brake pad or block and is not able to determine the wear of the wheel.

Document CN 209 115 580 U describes a tread brake unit in which an actuator is coupled to a brake block via a re-adjustment means that comprises a spindle. A displacement sensor is present for determining a position of the spindle relative to the actuator. To measure the position of the spindle, the sensor penetrates into a bore along the axis of the spindle. This complicates production of the spindle and weakens it.

Document DE 10 2017 123564 A1 shows a tread brake with a sensor that measures an angular position of a suspension lever. The measurement is used to determine a brake momentum. The angular information can additionally be used to calculate a wear of a brake pad. Integration of a sensor that determines the angular position of the suspension layer makes the suspension-system of the brake more complicated.

Document US 6,006,868 A discloses a contactless measurement of a position of an actuator rod of a brake in order to determine a status of the system, e.g. a wear of brake pads. The contactless measurement uses reflected optical, acoustical or radar waves. A brake pad wear measurement is also known from document EP 3 556 624 A1. Here a sensor is provided to determine a relative movement of parts of a brake adjustment device. Both systems require considerable space.

According to document JP 2001-330063 A the end of the lifetime of a breakpad is determined by a disconnection of a wire that grinds-down with the brake pad. This method does not provide information on the wear process, but only sense the end of life of a brake pad.

It is an object of the present invention to provide a tread brake unit with an automatic wear sensing for the brake block and the wheel, the brake block is pressed on, wherein the sensor can be closely integrated into the brake unit.

This object is solved by a tread brake unit according to the independent claim. Further developments and advantageous embodiments are subject of the dependent claims.

According to the invention, a tread brake unit of the above mentioned kind is characterized in that a sensor is present for determining the position of the spindle of the re-adjustment means relative to the housing.

By determining the spindle position with the use of the mentioned sensor, the cumulated wear of brake block and wheel can be determined automatically. Determining the spindle position is furthermore possible within the protected environment within the housing, which ensures a robust and long lasting operation of the sensor.

According to the invention, the sensor is designed to measure a linear distance of an element that represents a position of the spindle and a section of the housing. This way the actual displacement can be measured directly. The element that represents a position of the spindle is a transfer rod connected to the spindle. The transfer rod can advantageously be connected to the spindle via a washer that carries a protection bellow. The sensor on the other hand can be mounted at (and preferably within) the housing and be positioned to measure the distance to an end of the transfer rod. Generally, the sensor and the end of the transfer rod are preferably arranged within a sealed compartment in order to prevent dirt to spoil the measurements. The sealed compartment can be an elastic housing, in particular a bellow.

In a further advantageous embodiment of the tread brake unit the sensor is a contactless working sensor, e.g. operating optically or via a magnetic field. Operating without contact prevents the sensor to be worn off and thus enlarges the lifetime and the reliability of the sensor itself. It is further advantageously if the sensor provides absolute results, i.e. results that can be used without having to perform a calibration measurement and/or a reference measurement (e.g. to find a zero-point) on a regular basis.

The tread brake unit according to the invention is particularly suited for railroad freight vehicles/carriages. The sensor arrangement does not increase costs of the tread brake unit too much and is operable in the rough environment of such vehicles.

The invention will be explained in more detail hereafter with reference to the following drawings which shows an example of an embodiment. In the figures:
- Fig. 1: shows a example of a tread brake unit in a sectional drawing;
- Fig. 2: shows a schematic diagram of a measured wear signal as a function of time;
- Fig. 3: shows a second example of a tread brake unit in a side view;
- Fig. 4: shows an enlarged section of an embodiment of the tread brake unit according to fig. 1 with an installed sensor; and
- Fig. 5: shows the sensor arrangement used in the example shown in fig. 4 in an enlarged schematic drawing.

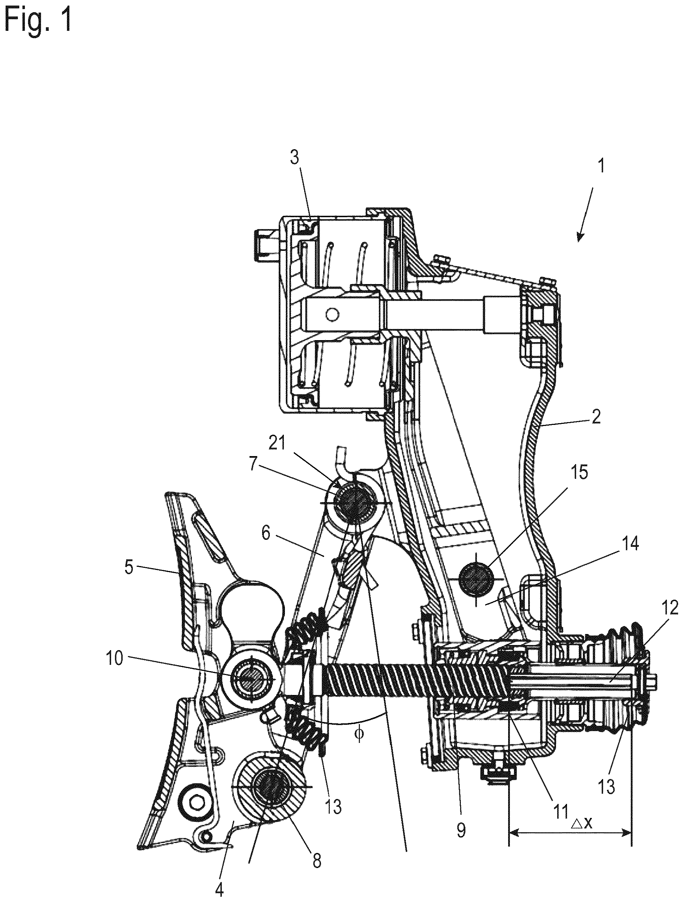

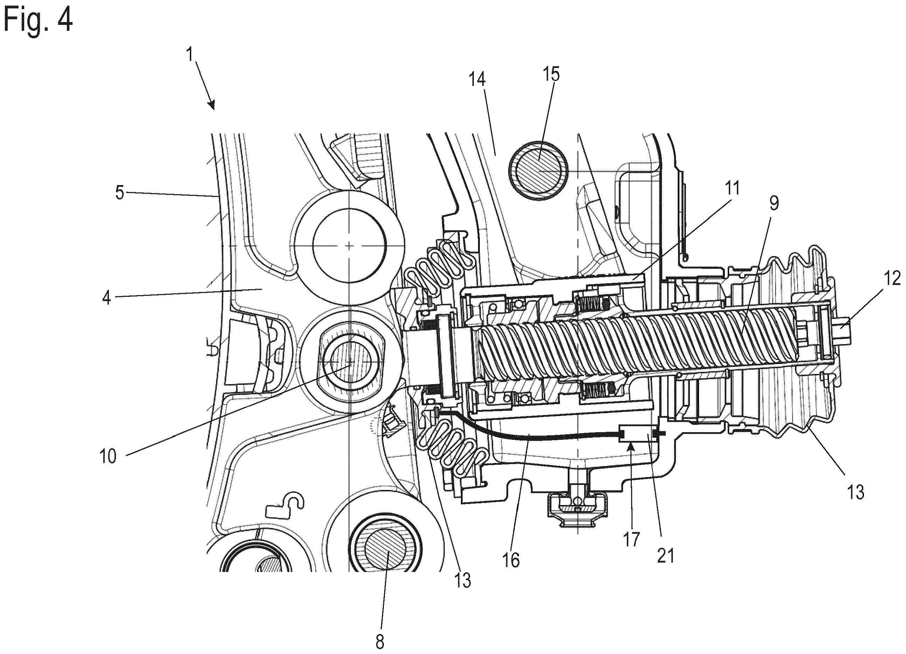

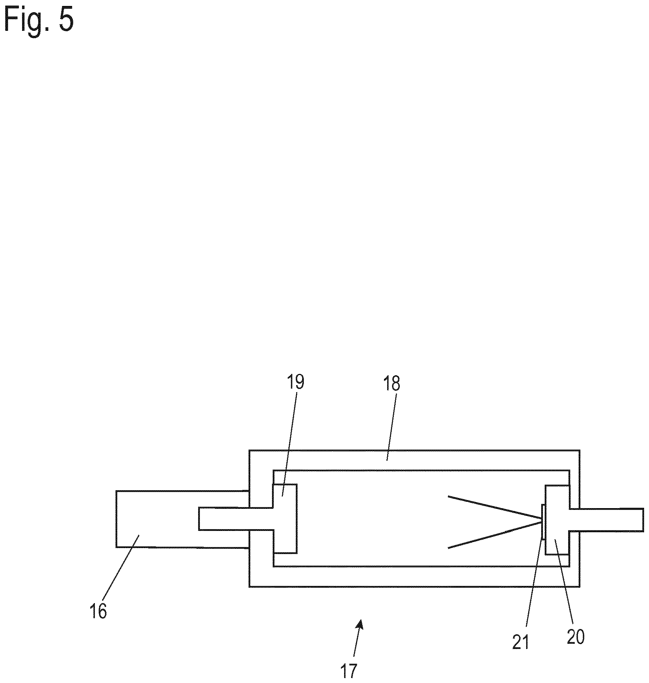

Fig. 1 shows a first non-inventive example of a brake unit 1 equipped with a sensor arrangement in a vertical sectional drawing. A further arrangement is shown in figs. 4 and 5. This further arrangement is based on the same type of brake.

Explanations on the design of the brake unit 1 shown in fig. 1 are as well valid for the embodiment shown in fig. 4 and 5. Furthermore, in all figures identical numerals denote identical or equivalently operating elements.

The tread brake unit 1 shown in fig. 1 is used to decelerate a railroad vehicle by pressing a brake pad 5 onto the rim of a wheel of the vehicle. The brake unit 1 is mounted to a chassis of the vehicle.

An actuator 3 for actuating the brake unit 1 is mounted to the housing 2 or is integrated into the housing. Furthermore, a brake pad holder 4 which holds the brake pad 5 is attached to the housing 2 by a suspension lever 6. The suspension lever 6 is pivotably mounted to the housing 2 in a first lever bearing 7, while the brake pad holder 4 is pivotably mounted to the suspension lever 6 in a second lever bearing 8. The housing 2 as well as the suspension lever 6 can be attached to the chassis via the axis of the first lever bearing 7. The suspension lever 6 is used to transfer braking forces that act between the wheel and the brake pad 5 into the chassis.

Actuation of the actuator 3, which is pneumatically operated in the shown embodiment, is transferred onto the brake pad holder 4 and accordingly the brake pad 5 via a spindle 9, which is part of a re-adjustment means 12 that allows to compensate for a wear of the brake pad 5 and the wheel. One end of the spindle 9 acts on the brake pad holder 4 via a spindle bearing 10. Within the housing 2, the spindle 9 is embraced by a spindle nut 11. A turning mechanism within the re-adjustment means 12 is used to turn the spindle and position the spindle 9 relative to the spindle nut 11. Parts of the spindle 9 that lie outside the housing 2 as well as parts of the re-adjustment means 12 that are positioned outside the housing 2 is protected by at least one protection bellow 13. For the sake of a concise representation the bellow 13 surrounding the spindle 9 is not shown attached to the housing 2.

The spindle nut 11 is mounted to a free end of a two sided actuation lever 14. The other end of the actuation lever 14 is attached to a moving part of the actuator 3. Actuating the actuator 3 thus moves the spindle nut 11 in the direction of the brake pad holder 4, which accordingly pressed onto the wheel in the brake process. The spindle nut 11 is preferably coupled to the actuation lever 14 by a cardan joint.

Fig. 1 shows the spindle 9 in a state of maximum displacement ΔX, i.e. in a state where brake pad 5 and the wheel are completely worn out. It is apparent from fig. 1 that the position of the spindle 9 reflects in the angular position of the suspension lever 6. Accordingly, a determination of the displacement of the spindle 9 relative to the housing 2 can be performed by measuring a pivoting angle φ between the housing 2 and the suspension lever 6.

In the example shown in fig. 1, a sensor 21 is provided on the axis of the first lever bearing 7 to perform the angle measurement. In fig. 1, the pivoting angle φ is denoted with respect to a null-position, which is the angular position that the suspension lever assumes if the spindle 9 is completely retracted into the spindle nut 11.

The sensor 21 in this example can for example be a potentiometer or an inductive sensor or an optical sensor or any other sensor that is capable to detect an angle change of the angle φ.

It has to be noted that the indirect method to determine the displacement of the spindle 9 via an angle measurement of the suspension lever 6 is not completely independent from a vertical movement of the wheel compared to the brake unit 1. A vertical movement of the wheel leads to a tilting of the brake pad 5 and the brake pad holder 4 compared to the orientation shown in fig. 1. This tilting influences the measured pivoting angle φ for a given displacement of the spindle 9. If very precise wear measurements are required, this effect might have to be compensated for.

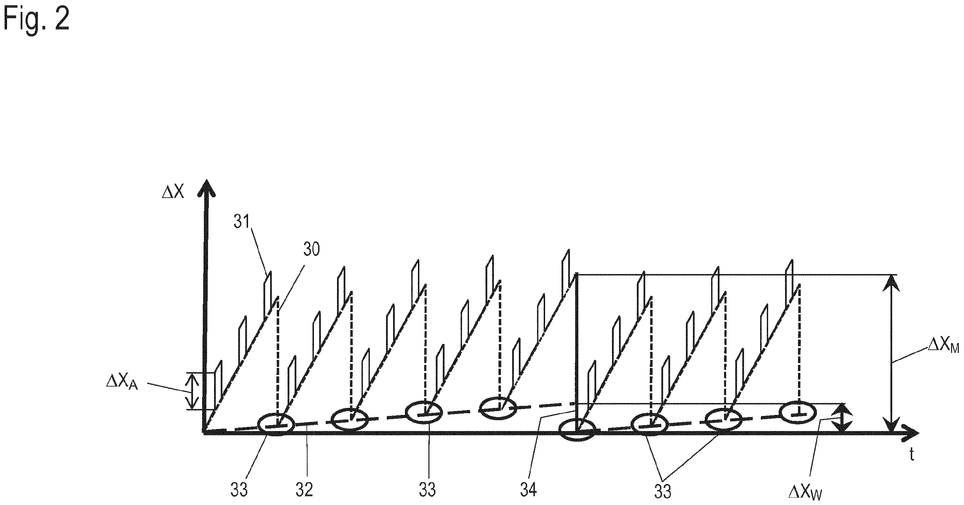

Fig. 2 shows measured signals of a wear sensor, for example the sensor 21 of fig. 1. The diagram depicts a measured spindle displacement ΔX on the vertical axis as a function of time t on the horizontal axis.

In the example of fig. 1, wherein a displacement ΔX of the spindle 9 is measured via the pivoting angle φ of the suspension lever 6, the displacement ΔX is not exactly proportional to the measured angle φ. However, in a good approximation and for displacements ΔX that are small compared to the length of the suspension lever 6, displacement ΔX and angle φ can be regarded as proportional to each other. Accordingly, the displacement value ΔX can also be seen as the sensor signal ΔX.

The time dependence of the displacement signal ΔX forms a cumulated wear curve 30, which is a superposition of wear of the brake block and wear of the wheel.

The originally measured signal is also affected by brake events. Brake events are by way of example shown in an actuator curve 31 which is super imposed on the cumulated wear curve 30. Each time the brake actuator is operated, the sensor signal rises by an actuator signal offset ΔX_{A}. By way of example, only selected brake events are shown in fig. 2. The brake events wear out the brake block and the wheels which is reflected in an initially rising cumulated wear curve 30. Only by way of example, the rise of the cumulated wear curve 30 is shown linear in time.

If the brake block is worn out, it is changed, which is shown as a brake block change event 33 in fig. 2. After the change of the brake block, the cumulated wear curve 30 drops to almost its initial value. The fact that the drop is not exactly to the initial value can be assigned to wear of the wheel.

Brake block changes 33 have to be performed in regular intervals. A curve 32 is drawn through the local minima of the cumulated wear curve 30. This curve 32 reflects the wear of the wheel. It is shown in fig. 2 as an interrupted line.

If the wheel is worn out to wear limit, it has to be changed. Such a wheel change 34 usually takes part in parallel with a brake block change 33. The cumulated wear curve 30 then drops back to its initial value, from where the same behavior as described before starts again. The maximum wheel wear, i.e. the wear up to the wear limit is shown as ΔX_{w} in fig. 2. The total maximum wear is shown in fig. 2 as ΔX_{M}.

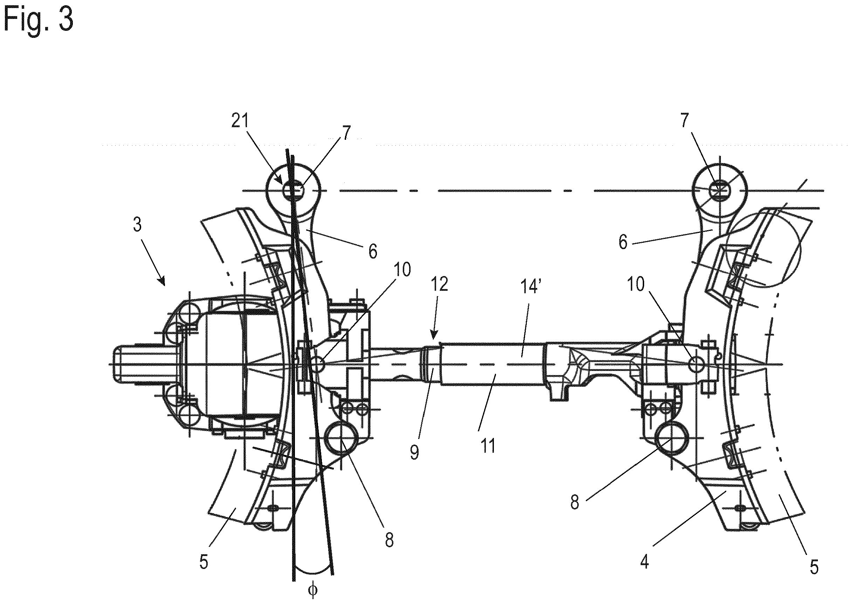

Fig. 3 shows a second non-inventive example of a brake unit 1 equipped with a sensor arrangement that operates in a comparable manner as the sensor arrangement shown in the first embodiment of fig. 1. The brake unit 1 shown in fig. 3 is a cost-optimized brake that is for example used in freight railroad vehicles.

It comprises two brake pad holders 4, each equipped with a brake pad 5. The brake bad holders 4 are mounted via suspension levers 6. Each suspension lever 6 is pivotally mounted to a chassis of the railroad vehicle in a first lever bearing 7, while each brake pad holder 4 is pivotally mounted to the suspension lever 6 in a second lever bearing 8.

The two brake pad holders 4 are facing in opposite directions. The brake unit 1 is mounted between two adjacent wheels of the railroad vehicle at the same height as the axis of the wheels is position. Pressing the brake pad holders 4 to the outside leads to a braking operation at both wheels. In order to press the brake pad holders 4 outwards, an actuator 3 is coupled with one of the brake pad holders 4 with its housing, while the other brake pad holder 4 is coupled to a moving part of the actuator 3 via an actuation rod 14'. Operating the actuator 3, for example pneumatically, leads to a repelling force between the two brake pad holders 4.

Re-adjustment means 12 are incorporated into the actuation rod 14'. The readjustment means 12 for example turns a spindle 9 relative to a spindle nut 11, which are both parts of the actuation rod 14'. Accordingly, the readjustment means 12 is able to extend the actuation rod 14' in order to compensate for wear of the brake pads 5 and/or the wheels.

Similar to the first embodiment, an extension of the actuation rod 14' leads to a change of the angular position that the suspension lever 6 assumes relative to a null-position.

As in the first embodiment shown in fig. 1, the sensor 21 is provided on the axis of the first lever bearing 7 of the one of the suspension levers 6 in order to perform a measurement of a pivoting angle φ. In the drawing, the pivoting angle φ is denoted with respect to a null-position, which for example is the angular position that the suspension lever assumes if the spindle 9 is completely retracted into the spindle nut 11.

As explained in connection with the first embodiment, the sensor 21 can for example be a potentiometer or an inductive sensor or an optical or any other sensor that is capable of detecting a change of the angle φ.

Fig. 4 shows an embodiment of a tread brake unit 1 according to the invention. Fig. 4 only depicts an enlarged section around the spindle. For all other parts of the brake unit reference is made to fig. 1. The basic design of tread brake unit 1 is identical to or at least similar as shown in the embodiment of fig. 1. However, the sensor 21 is part of a sensor arrangement 17 differs from the sensor arrangement of the first example. In the embodiment of fig. 4 a displacement sensor 21 is used to measure a linear displacement of the spindle 9.

The sensor arrangement 17 is shown in more detail in a schematic drawing in fig. 5.

The sensor arrangement 17 comprises a sensor 21 that is mounted on a screw 20. The sensor 21 is attached to the housing 2 of the brake unit 1 by this screw 20 in the vicinity of the spindle nut 11. Advantageously, the sensor arrangement 17 is positioned within the housing 2, which protects the sensor arrangement 17 in the rough environment of the brake unit.

A transfer rod 16 is attached with one of its end to the moving end of the spindle 9 near the spindle bearing 10. The transfer rod 16 can for example be attached to a washer that supports the protection bellow 13. The other end of the rod is positioned in front of the sensor 21. The transfer rod 16 thus transfers the movement of the spindle 9 in front of the sensor 21.

The sensor 21 is a distance sensor that measures the distance to the end of the transfer rod 16, which is equivalent to the spindle displacement. The sensor 21 can for example be an optically or acoustically (in particular ultrasonic) operating distance sensor.

In order to protect the sensor 21 from dust and/or oil, an elastic housing 18 is mounted around the free space between sensor 21 and the end of the transfer rod 16. In a preferred embodiment, the elastic housing 18, which can be a bellow, is held by the screw 20 that carries the sensor 21 and by a further screw 19 that is attached to the free end of the transfer rod 16.

In all examples shown the sensor 21 is preferably connected to or part of an electronic evaluation circuit that transfers the measurement results to a superordinate monitoring system. It is advantageous to have the electronic evaluation circuit being powered by e.g. a battery and to transmit the measured results wirelessly. That way a refitting of the sensor arrangement is simplified, in particular since freight carriages are not necessarily electrified.

### BEZUGSZEICHEN

- 1: Brake unit
- 2: Housing
- 3: Actuator
- 4: Brake pad holder
- 5: Brake pad
- 6: Suspension lever
- 7: First lever bearing
- 8: Second lever bearing
- 9: Spindle
- 10: Spindle bearing
- 11: Spindle nut
- 12: Re-adjustment means
- 13: Protection bellow
- 14: Actuation lever
- 14': Actuation rod
- 15: Actuation lever bearing
- 16: Transfer rod
- 17: Sensor arrangement
- 18: Elastic housing
- 19: Screw
- 20: Screw
- 21: Sensor

- 30: Cumulated wear curve
- 31: Actuator curve
- 32: Wheel wear curve
- 33: Brake block change
- 34: Wheel change

- t: Time
- ΔX: Sensor signal (displacement)
- ΔX_{A}: Actuator signal offset
- ΔX_{M}: Maximum wear part of signal
- ΔX_{W}: Maximum wheel wear part of signal
- φ: Pivoting angle

## Claims

1. Tread brake unit (1) for a railroad vehicle comprising an actuator (3) mounted to a housing (2) of the brake unit (1), wherein the actuator (3) is coupled to a brake pad holder (4) via a wear re-adjustment means (12) comprising a spindle (9), wherein a sensor (21) is present for determining the position of the spindle (9) of the re-adjustment means relative to the housing (2), and wherein the sensor (21) is designed to measure a linear distance of an element that represents a position of the spindle (9) and a section of the housing (2), **characterized in that**
the element that represents a position of the spindle (9) is a transfer rod (16) connected to the spindle (9).

2. Tread brake unit (1) according to claim 1, wherein the transfer rod (16) is connected to the spindle (9) via a washer that carries a protection bellow (13).

3. Tread brake unit (1) according to claim 1 or 2, wherein the sensor (21) is mounted at the housing (2) and positioned to measure the distance to an end of the transfer rod (16).

4. Tread brake unit (1) according to claim 3, wherein the sensor (21) and the end of the transfer rod (16) are arranged within a sealed compartment.

5. Tread brake unit (1) according to claim 4, wherein the sealed compartment is an elastic housing (18), in particular a bellow.

6. Tread brake unit (1) according to one of claims 1 to 5, wherein the sensor (21) is mounted within the housing (2).

7. Tread brake unit (1) according to one of claims 1 to 6, wherein the sensor (21) is a contactless working sensor.

8. Tread brake unit (1) according to one of claims 1 to 7, wherein the sensor (21) is an absolute sensor.

9. Tread brake unit (1) according to one of claims 1 to 8, wherein the sensor (21) is an optical or acoustical or inductive distance sensor or a Hall- sensor.

## Patentansprüche

1. Laufflächenbremseinheit (1) für ein Schienenfahrzeug, umfassend ein Stellglied (3), das an einem Gehäuse (2) der Bremseinheit (1) montiert ist, wobei das Stellglied (3) über eine Verschleißnachstellungseinrichtung (12), die eine Spindel (9) umfasst, mit einer Bremsbacke (4) gekoppelt ist, wobei ein Sensor (21) vorhanden ist, um die Position der Spindel (9) der Verschleißnachstellungseinrichtung in Bezug zum Gehäuse (2) zu bestimmen, und wobei der Sensor (21) dazu ausgestaltet ist, eine lineare Entfernung eines Elements, das eine Position der Spindel (9) darstellt, und eines Abschnitts des Gehäuses (2) zu messen, **dadurch gekennzeichnet, dass**
das Element, das eine Position der Spindel (9) darstellt, ein mit der Spindel (9) verbundener Antriebshebel (16) ist.

2. Laufflächenbremseinheit (1) nach Anspruch 1, wobei der Antriebshebel (16) über eine Unterlegscheibe, die einen Schutzbalg (13) trägt, mit der Spindel (9) verbunden ist.

3. Laufflächenbremseinheit (1) nach Anspruch 1 oder 2, wobei der Sensor (21) am Gehäuse (2) montiert und dazu positioniert ist, die Entfernung zu einem Ende des Antriebshebels (16) zu messen.

4. Laufflächenbremseinheit (1) nach Anspruch 3, wobei der Sensor (21) und das Ende des Antriebshebels (16) innerhalb einer verschlossenen Kammer angeordnet sind.

5. Laufflächenbremseinheit (1) nach Anspruch 4, wobei die verschlossene Kammer ein elastisches Gehäuse (18), insbesondere ein Balg, ist.

6. Laufflächenbremseinheit (1) nach einem der Ansprüche 1 bis 5, wobei der Sensor (21) innerhalb des Gehäuses (2) montiert ist.

7. Laufflächenbremseinheit (1) nach einem der Ansprüche 1 bis 6, wobei der Sensor (21) ein kontaktloser Sensor ist.

8. Laufflächenbremseinheit (1) nach einem der Ansprüche 1 bis 7, wobei der Sensor (21) ein Absolutsensor ist.

9. Laufflächenbremseinheit (1) nach einem der Ansprüche 1 bis 8, wobei der Sensor (21) ein optischer oder akustischer oder induktiver Sensor oder ein Hallsensor ist.

## Revendications

1. Unité (1) de frein à sabot pour un véhicule ferroviaire comportant un actionneur (3) monté sur un boîtier (2) de l'unité (1) de frein, dans laquelle l'actionneur (3) est accouplé à un support (4) de plaquette de frein par des moyens (12) de rattrapage de l'usure comprenant une broche (9), dans laquelle un capteur (21) est présent pour déterminer la position de la broche (9) des moyens de rattrapage de l'usure par rapport au boîtier (2), et dans laquelle le capteur (21) est conçu pour mesurer une distance linéaire d'un élément qui représente une position de la broche (9) et d'une partie du boîtier (2), **caractérisée en ce que** l'élément qui représente une position de la broche (9) est une barre (16) de transfert reliée à la broche (9).

2. Unité (1) de frein à sabot suivant la revendication 1, dans laquelle la barre (16) de transfert est reliée à la broche (9) par une rondelle qui porte un soufflet (13) de protection.

3. Unité (1) de frein à sabot suivant la revendication 1 ou 2, dans laquelle le capteur (21) est monté sur le boîtier (2) et positionné pour mesurer la distance à une extrémité de la barre (16) de transfert.

4. Unité (1) de frein à sabot suivant la revendication 3, dans laquelle le capteur (21) et l'extrémité de la barre (16) de 1
transfert sont disposés au sein d'un compartiment scellé.

5. Unité (1) de frein à sabot suivant la revendication 4, dans laquelle le compartiment scellé est un boîtier (18) élastique, notamment un soufflet.

6. Unité (1) de frein à sabot suivant l'une des revendications 1 à 5, dans laquelle le capteur (21) est monté dans le boîtier (2) .

7. Unité (1) de frein à sabot suivant l'une des revendications 1 à 6, dans laquelle le capteur (21) est un capteur opérant sans contact.

8. Unité (1) de frein à sabot suivant l'une des revendications 1 à 7, dans laquelle le capteur (21) est un capteur absolu.

9. Unité (1) de frein à sabot suivant l'une des revendications 1 à 8, dans laquelle le capteur (21) est un capteur de distance optique ou acoustique ou à induction ou un capteur à effet Hall.
